# EUROPÄISCHE PATENTSCHRIFT

(11) **EP 3 266 015 B1**
(45) Veröffentlichungstag und Bekanntmachung des Hinweises auf die Patenterteilung: **16.06.2021**
(21) Anmeldenummer: 16707484.8
(22) Anmeldetag: 03.03.2016
(51) Int. Cl.: G09B 9/14, B21C 47/34

(54) **FLUGSIMULATOR UND VERFAHREN ZUR FLUGSIMULATION**
FLIGHT SIMULATOR AND METHOD FOR FLIGHT SIMULATION
SIMULATEUR DE VOL ET PROCÉDÉ DE SIMULATION DE VOL

(30) Priorität: 06.03.2015 AT 501782015
(43) Veröffentlichungstag der Anmeldung: 10.01.2018
(73) Patentinhaber: AMST-Systemtechnik GmbH, 5282 Ranshofen (AT)
(72) Erfinder: SCHLÜSSELBERGER Jun., Richard, 5310 Tiefgraben (AT); MAYRHOFER, Michael, 5274 Burgkirchen (AT); SCHLÜSSELBERGER, Rainer, 5282 Braunau am Inn (AT)
(74) Vertreter: Puchberger & Partner Patentanwälte
(86) Internationale Anmeldenummer: PCT/EP2016/054548
(87) Internationale Veröffentlichungsnummer: WO 2016/142268

(56) Entgegenhaltungen:
- WO-A1-2013/178828
- DE-A1-102011 122 229
- FR-A1- 2 687 491
- US-A- 5 975 907
- US-A1- 2008 268 404
- US-A1- 2014 087 334
- Frank Nieuwenhuizen ET AL: "Implementation and Validation of a Model of the MPI Stewart Platform", AIAA Modeling and Simulation Technologies Conference, 2 August 2010 (2010-08-02), XP055581156, Reston, Virigina DOI: 10.2514/6.2010-8217 ISBN: 978-1-62410-152-6
- F. M. Nieuwenhuizen ET AL: "Cross-platform validation for a model of a low-cost Stewart platform", Journal of Modeling, Simulation, Identification, and Control, 31 January 2012 (2012-01-31), XP055670993, DOI: 10.7726/jmsic.2013.1001

## Beschreibung

Die Erfindung betrifft einen Flugsimulator sowie ein Verfahren zur Flugsimulation gemäß Oberbegriff der unabhängigen Patentansprüche.

Flugsimulatoren sind in unterschiedlichen Ausführungsformen bekannt und publiziert. Beispielsweise sind Flugsimulatoren bekannt, bei denen eine Simulatorkabine auf einem bodenstehenden Hexapod angeordnet ist. Ein Hexapod ist eine Ausführungsform einer Parallelkinematikanordnung, bei der über die Längenänderungen einzelner Linearbewegungsvorrichtungen ein Trägerelement relativ zu einer Basis entlang von sechs Freiheitsgrade bewegt werden kann. Diese sechs Freiheitsgrade entsprechen drei rotatorischen und drei translatorischen Freiheitsgraden.

Derartige Hexapods sind Standardbaugruppen und werden zur Bewegung und zur Steuerung der Simulatorkabinen eingesetzt. Nachteilig an herkömmlichen Flugsimulatoren ist, dass durch die spezielle Konfiguration der Hexapods die Bewegungsfreiheit eingeschränkt ist. So ist eine Neigung der Kabine um die Nickachse unter Einhaltung üblicher Steuerreserven auf etwa ±20° begrenzt. Dies bedeutet, dass die Person bzw. die Simulatorkabine maximal 20° nach hinten und maximal 20° nach vorne geneigt werden kann. Die Rollachse der Person bzw. der Simulatorkabine kann folglich ausgehend von einem waagrechten Verlauf unter Einhaltung üblicher Steuerreserven nur weniger als 20° nach oben oder nach unten geneigt werden.

Diese Bewegungsfreiheit reicht jedoch zur Simulation spezieller Flugsituationen nicht aus. Eine derartige spezielle Flugsituation ist beispielsweise ein sogenannter "Full Stall", bei dem es im Wesentlichen zu einem vollständigen Strömungsabriss an den maßgeblichen Teilen der Tragflächen kommt. Zur Vergrößerung der Bewegungsfreiheit werden gemäß Stand der Technik komplizierte Konstruktionen vorgeschlagen, die eine Kollision der einzelnen Linearbewegungsvorrichtungen verhindern sollen. In der Praxis können sich derartige Konfigurationen jedoch kaum durchsetzen, da eine Steuerung dieser speziellen Anordnungen zu komplex ist, um bei geringen Stückzahlen wirtschaftlich implementierbar zu sein. Bei herkömmlichen Hexapods hingegen sind Steuerungsschnittstellen vorhanden und bekannt.

Die Bewegungsfreiheit bzw. die Bewegungscharakteristik herkömmlicher Flugsimulatoren auf Hexapod-Basis (auch Envelope genannt) wird anhand von worst-case-Szenarien ausgelegt, wobei die Maximalstellungen des Simulators - lediglich hypothetisch - in diesen worst-case-Situationen auftreten, was aber im realen Betrieb des Simulators so gut wie nie vorkommt. Bei der Simulation eines real wahrscheinlichen Strömungsabrisses liegt die Neigung der Simulatorkabine bei herkömmlichen Simulatoren dadurch weit entfernt von der maximalen Bewegungsfreiheit des Hexapods, wodurch die potenziell zu Verfügung stehende Bewegungsfreiheit des Hexapods in der Realität nicht annähernd ausgeschöpft wird.

Dadurch kann ferner bei herkömmlichen Flugsimulatoren auf Hexapod-Basis kein Full-Stall ausreichend realistisch simuliert werden, sondern nur ein beginnender bzw. teilweiser Strömungsabriss.

Herkömmliche Bewegungssimulatoren sind beispielsweise aus der US 5,975,907 A, der FR 2 687 491 A1, der US 2008/268404 A1 und der Publikation von Frank Nieuwenhuizen et al. mit dem Titel "Implementation and validation of a model of the MPI Stewart Platform" (ISBN: 978-1-62410-152-6) bekannt.

In der US 5,975,907 A ist ein Bewegungssimulator mit einer bewegbaren Basisplatte offenbart, wobei der Hexapod samt Simulatorkabine nach vorne geneigt ist.

In der Publikation von Frank Nieuwenhuizen et al. ist ein herkömmlicher Full Flight Simulator offenbart, welcher einen maximalen Nickwinkel von unter 25° ermöglicht.

Aufgabe der Erfindung ist es nun einen Flugsimulator und ein Verfahren zur Flugsimulation zu schaffen, durch den bzw. durch das die Nachteile des Standes der Technik überwunden werden, wodurch eine verbesserte Flugsimulation ermöglicht ist. Insbesondere ist eine Neigung der Person um mehr als 20° oder 25° ermöglicht, sodass beispielsweise ein Full-Stall-Strömungsabriss ausreichend wahrnehmungsgetreu simuliert werden kann.

Die erfindungsgemäßen Aufgaben werden durch die Merkmale der unabhängigen Patentansprüche gelöst.

Gegebenenfalls betrifft die Erfindung einen Flugsimulator umfassend:
- eine Simulatorkabine, wobei in der Simulatorkabine ein Sitz für eine Bedienperson, gegebenenfalls eine Bildanzeigevorrichtung zur Anzeige der simulierten Umgebung, und bevorzugt mindestens ein Bedienelement zur Erzeugung von Simulationssteuerdaten und insbesondere zur Steuerung des simulierten Fluggeräts und zur Einflussnahme auf die Simulation durch die Bedienperson vorgesehen sind,
- eine Parallelkinematikanordnung, die eine Basis, ein Trägerelement und mehrere Linearbewegungsvorrichtungen umfasst, wobei das Trägerelement über mindestens drei, bevorzugt sechs Linearbewegungsvorrichtungen mit der Basis verbunden ist, und wobei die Basis gegebenenfalls mit dem Boden und das Trägerelement mit der Simulatorkabine verbunden oder gekoppelt ist, sodass die Simulatorkabine auf der Parallelkinematikanordnung angeordnet ist oder bodenstehend ausgebildet ist, wobei die Simulatorkabine eine Grundstellung aufweist, die im Wesentlichen einem stationären Geradeausflug des simulierten Fluggeräts entspricht und in der die Rollachse des simulierten Fluggeräts oder der Bedienperson im Wesentlichen waagrecht verläuft, wobei die Simulatorkabine eine maximale positive Nickstellung aufweist, in der die Rollachse ausgehend vom waagrechten Verlauf um einen ersten Nickwinkel im Rahmen der kinematischen Möglichkeiten der Parallelkinematikanordnung unter Einhaltung von gegebenenfalls vorgesehenen Steuerreserven weitestmöglich nach oben geneigt ist und die Bedienperson dadurch nach hinten geneigt ist, wobei die Neigung bevorzugt um die Nickachse oder um eine zur Nickachse parallelen Achse erfolgt, wobei die Simulatorkabine eine maximale negative Nickstellung aufweist, in der die Rollachse ausgehend vom waagrechten Verlauf um einen zweiten Nickwinkel im Rahmen der kinematischen Möglichkeiten der Parallelkinematikanordnung unter Einhaltung von gegebenenfalls vorgesehenen Steuerreserven nach unten geneigt ist und die Bedienperson dadurch nach vorne geneigt ist, wobei die Neigung bevorzugt um die Nickachse oder um eine zur Nickachse parallelen Achse erfolgt, und wobei der erste Nickwinkel größer ist als 25°. Gegebenenfalls ist vorgesehen, dass der Betrag des ersten Nickwinkels größer ist als der Betrag des zweiten Nickwinkels, oder dass der Betrag des ersten Nickwinkels um einen Differenzwinkel größer ist als der Betrag des zweiten Nickwinkels. Gegebenenfalls ist vorgesehen, dass die Neigung der Simulatorkabine um die Nickachse oder um eine zur Nickachse parallelen Achse zwischen der maximalen negative Nickstellung und der maximalen positiven Nickstellung ausschließlich durch Betätigung der Parallelkinematikanordnung erfolgt.
Gegebenenfalls ist vorgesehen, dass die Linearbewegungsvorrichtungen als Linearbewegungsvorrichtungen mit einer steuerbar oder regelbar veränderbaren Länge ausgebildet sind, wobei die Länge der Linearbewegungsvorrichtungen zwischen oder im Bereich einer minimalen Länge und einer maximalen Länge liegt, sodass das Trägerelement relativ zur Basis durch Längenänderungen der Linearbewegungsvorrichtungen um mindestens zwei Achsen schwenkbar ist und gegebenenfalls drei Schwenkfreiheitsgrade und drei Translationsfreiheitsgrade aufweist.

Gegebenenfalls ist vorgesehen, dass die Linearbewegungsvorrichtungen paarweise angeordnet sind, wobei zwei ein Linearbewegungsvorrichtungspaar bildende Linearbewegungsvorrichtungen zueinander schräggestellt sind, sodass insbesondere ein Hexapod gebildet ist.
Gegebenenfalls ist vorgesehen, dass die Parallelkinematikanordnung eine Parallelkinematikgrundstellung aufweist, in der die Basis und das Trägerelement im Wesentlichen parallel verlaufen, und dass die Parallelkinematikanordnung in einer von der Parallelkinematikgrundstellung abweichenden Stellung angeordnet ist, wenn die Simulatorkabine in ihrer Grundstellung angeordnet ist.
Gegebenenfalls ist vorgesehen, dass die Parallelkinematikanordnung eine Parallelkinematikgrundstellung aufweist, in der die Basis und das Trägerelement im Wesentlichen parallel verlaufen, und dass die Basis zum Trägerelement um die Nickachse oder um eine zur Nickachse parallelen Achse geneigt ist, wenn die Simulatorkabine in ihrer Grundstellung angeordnet ist.
Gegebenenfalls ist vorgesehen, dass die Parallelkinematikanordnung eine Parallelkinematikgrundstellung aufweist, in der die Basis und das Trägerelement im Wesentlichen parallel verlaufen, und in der die Rollachse um einen positiven Differenzwinkel nach oben geneigt ist, und in der die Simulatorkabine in einer von ihrer Grundstellung abweichenden Stellung angeordnet ist.
Gegebenenfalls ist vorgesehen, dass die Basis gegenüber einer waagrechten Ebene um einen positiven Differenzwinkel nach oben geneigt ist, oder dass die Rollachse gegenüber dem Verlauf des Trägerelements um einen positiven Differenzwinkel nach oben geneigt ist, oder dass die Basis gegenüber einer waagrechten Ebene und die Rollachse gegenüber dem Verlauf des Trägerelements zusammen um einen positiven Differenzwinkel nach oben geneigt sind, wobei der Differenzwinkel bevorzugt in einer Normalebene der Nickachse angegeben ist.
Gegebenenfalls ist vorgesehen, dass zur geneigten Positionierung der Basis gegenüber der waagrechten Ebene eine keilförmige oder eine keilförmig wirkende Keilanordnung vorgesehen ist, die zwischen der Basis und dem Boden vorgesehen ist. Gegebenenfalls ist vorgesehen, dass zur geneigten Positionierung der Rollachse gegenüber dem Verlauf des Trägerelements eine keilförmige oder eine keilförmig wirkende Keilanordnung vorgesehen ist, die zwischen Simulatorkabine und Trägerelement vorgesehen ist.
Gegebenenfalls ist vorgesehen, dass die Keilanordnung eine starre Keilanordnung ist, deren Keilwinkel während der Simulation unverändert ist.
Gegebenenfalls ist vorgesehen, dass alle Linearbewegungsvorrichtungen im Wesentlichen dieselben minimalen und maximalen Längen aufweisen und insbesondere baugleich ausgebildet sind, sodass eine symmetrische Parallelkinematikanordnung gebildet ist.
Gegebenenfalls ist vorgesehen, dass eine entlang der Blickrichtung der Bedienperson gesehen vordere Linearbewegungsvorrichtung oder ein vorderes Linearbewegungsvorrichtungspaar eine größere maximale Länge aufweist, als eine hintere Linearbewegungsvorrichtung oder ein hinteres Linearbewegungsvorrichtungspaar, sodass eine asymmetrische Parallelkinematikanordnung gebildet ist.
Gegebenenfalls ist vorgesehen, dass in der Parallelkinematikgrundstellung der Aufstellwinkel einer entlang der Blickrichtung der Bedienperson gesehen vorderen Linearbewegungsvorrichtung oder eines vorderen Linearbewegungsvorrichtungspaars steiler ist, als der Aufstellwinkel einer hinteren Linearbewegungsvorrichtung oder eines hinteren Linearbewegungsvorrichtungspaars, sodass eine asymmetrische Parallelkinematikanordnung gebildet ist.

Gegebenenfalls ist vorgesehen, dass der zweite Nickwinkel zwischen -10° und -25° beträgt, dass der zweite Nickwinkel zwischen -10° und -22° beträgt, und/oder dass der zweite Nickwinkel zwischen -19° und -21° beträgt.
Gegebenenfalls ist vorgesehen, dass der erste Nickwinkel zwischen 25° und 35° beträgt, dass der erste Nickwinkel zwischen 28° und 35° beträgt, dass der erste Nickwinkel zwischen 29° und 35° beträgt, dass der erste Nickwinkel zwischen 30° und 35° beträgt, dass der erste Nickwinkel zwischen 32° und 35° beträgt, und/oder dass der erste Nickwinkel zwischen 29° und 31° beträgt.
Gegebenenfalls ist vorgesehen, dass der Differenzwinkel zwischen etwa 2° und 20°, zwischen etwa 2° und 12°, zwischen etwa 3° und 10°, zwischen 4° und 8° und/oder etwa 5° beträgt.
Gegebenenfalls ist vorgesehen, dass zwischen dem Boden und der Basis oder zwischen dem Trägerelement und der Simulatorkabine ein Drehteller oder ein Drehring vorgesehen ist, sodass die Simulatorkabine um eine Hochachse, insbesondere um die Gierachse drehbar ist.

Gegebenenfalls ist vorgesehen, dass zur Verarbeitung von Simulationssteuerdaten und zur Steuerung der Parallelkinematikanordnung eine Regelungseinrichtung vorgesehen ist, die ein Regelungsmodell umfasst, wobei über die Regelungseinrichtung die Simulatorkabine von der maximalen positiven Nickstellung in die maximale negative Nickstellung bringbar ist, wobei durch die maximale positive Nickstellung und die maximale negative Nickstellung die Nick-Bewegungsfreiheit der Simulatorkabine definiert ist.

Gegebenenfalls betrifft die Erfindung ein Verfahren zur Flugsimulation auf einem Flugsimulator nach einem der vorangegangenen Ansprüche umfassend folgende Schritte:
- Betätigen der Parallelkinematikanordnung, sodass sich die Simulatorkabine in ihrer Grundstellung befindet,
- anschließend Betätigen der Parallelkinematikanordnung, sodass die Simulatorkabine von ihrer Grundstellung um die Nickachse oder um eine zur Nickachse parallelen Achse um einen positven Nickwinkel von mehr als 25° nach hinten geneigt wird.
Gegebenenfalls ist vorgesehen, dass durch eine erste Betätigung der Parallelkinematikanordnung, durch welche sich die Simulatorkabine in ihrer Grundstellung befindet, ein stationärer Geradeausflug simuliert wird,
und dass durch eine zweite Betätigung der Parallelkinematikanordnung, durch welche die Simulatorkabine von ihrer Grundstellung um die Nickachse oder um eine zur Nickachse parallelen Achse um einen positiven Nickwinkel von mehr als 25° nach hinten geneigt wird, ein Full-Stall-Strömungsabriss simuliert wird.
Gegebenenfalls ist vorgesehen, dass die Simulatorkabine ausschließlich durch Betätigung der Parallelkinematikanordnung von der Grundstellung um die Nickachse oder um eine zur Nickachse parallelen Achse um einen positiven Nickwinkel von mehr als 25° nach hinten geneigt wird.
Gegebenenfalls ist vorgesehen, dass der positive Nickwinkel 28°, 29°, 30°, 31°, 32°, 33°, 34°, 35° oder mehr beträgt.
Gegebenenfalls ist vorgesehen, dass durch eine erste Betätigung der Parallelkinematikanordnung, durch welche sich die Simulatorkabine in ihrer Grundstellung befindet, ein stationärer Geradeausflug simuliert wird,
und dass durch eine zweite Betätigung der Parallelkinematikanordnung, durch welche die Simulatorkabine von ihrer Grundstellung um die Nickachse oder um eine zur Nickachse parallelen Achse um einen positiven Nickwinkel von mehr als 25° nach hinten geneigt wird, ein Strömungsabriss oder ein Full-Stall- Strömungsabriss simuliert wird, und dass die simulierte Flugsituation dabei von einem zur Auslegung der Bewegungsfreiheit oder der Bewegungscharakteristik eines herkömmlichen Simulators herangezogenen worst-case-Szenario abweicht.
Gegebenenfalls ist vorgesehen, dass durch eine erste Betätigung der Parallelkinematikanordnung, durch welche sich die Simulatorkabine in ihrer Grundstellung befindet, ein stationärer Geradeausflug simuliert wird, wobei die simulierte Geschwindigkeit geringer ist als die maximale Geschwindigkeit des simulierten Fluggeräts und insbesondere um mehr als 10% geringer ist als die maximale Geschwindigkeit des simulierten Fluggeräts,
und dass durch eine zweite Betätigung der Parallelkinematikanordnung, durch welche die Simulatorkabine von ihrer Grundstellung um die Nickachse oder um eine zur Nickachse parallelen Achse um einen positiven Nickwinkel von mehr als 25° nach hinten geneigt wird, ein Strömungsabriss oder ein Full-Stall- Strömungsabriss simuliert wird, wobei die simulierte Geschwindigkeit beim Strömungsabriss geringer ist als die maximale Geschwindigkeit des simulierten Fluggeräts und insbesondere um mehr als 10% geringer ist als die maximale Geschwindigkeit des simulierten Fluggeräts, und somit von dem zur Auslegung der Bewegungsfreiheit oder der Bewegungscharakteristik eines herkömmlichen Simulators herangezogenen worst-case-Szenario abweicht.

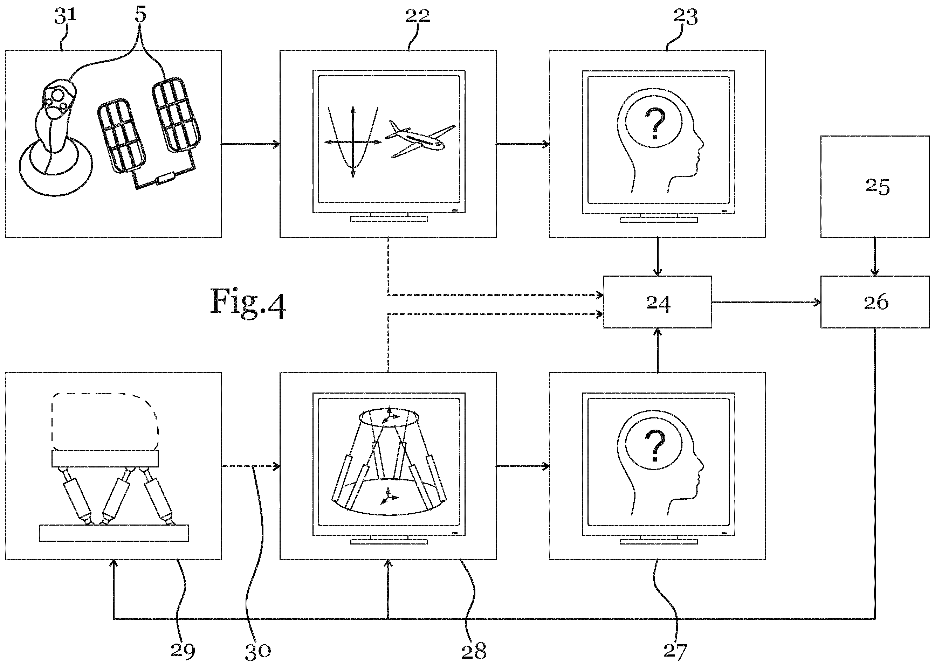

Gegebenenfalls betrifft die Erfindung ein Regelungsmodell und/oder ein Regelungsverfahren für einen beliebigen Bewegungssimulator, wie beispielsweise für einen Bewegungssimulator mit einem Hexapod, eine Einarmzentrifuge, eine Mehrarmzentrifuge, eine Ein- oder Mehrarmzentrifuge mit verfahrbarem Schlitten, wobei der Bewegungssimulator zur Simulation eines Flugzeugs, eines Helikopters, eines Fahrzeugs und/oder eines Schiffs, insbesondere zur Simulation eines beliebigen Fortbewegungsmittels, geeignet oder eingerichtet ist, und wobei das Regelungsmodell und/oder das Regelungsverfahren gemäß Fig. 4, gemäß der zu Fig. 4 zugehörigen Beschreibung und/oder gemäß der gesamten Beschreibung ausgebildet ist oder sind.

Gegebenenfalls ist die Basis starr mit dem Boden verbunden. Gegebenenfalls ist das Trägerelement starr mit der Simulatorkabine verbunden.

Gegebenenfalls ist der Flugsimulator in allen Ausführungsformen als sogenannter "Full Flight Flugsimulator" ausgebildet, bei dem die Bedienperson ein Fluggerät in einer simulierten Umgebung durch Verwendung der Bedienelemente steuern kann und bei dem die in der betreffenden realen Flugsituation auftretenden Sinneseindrücke für die Bedienperson ausreichend oder optimal wahrnehmungsgetreu simuliert werden. Gegebenenfalls ist vorgesehen, dass der Keilwinkel der Keilanordnung dem Differenzwinkel entspricht.

Zur Verbesserung der Klarheit werden in weiterer Folge einige Begriffe definiert:
Die Rollachse entspricht jener Achse, die im Wesentlichen der Blickrichtung bei entspanntem, geradeaus gerichtetem Blick folgt. Insbesondere ist die Rollachse eine waagrecht verlaufende Achse, der beispielsweise ein Fluggerät bei stationärem Geradeausflug folgt.
Die Gierachse ist insbesondere jene Achse, die normal auf die Rollachse steht und insbesondere im Wesentlichen lotrecht verläuft oder in einer lotrechten Ebene liegt. Die Nickachse ist jene Achse, die normal auf die zwei zuvor genannten Achsen steht. Insbesondere ist die Nickachse eine waagrechte Achse, die von links nach rechts oder von rechts nach links verläuft. Bevorzugt treffen einander definitionsgemäß die Nickachse, die Gierachse und die Rollachse in einem Punkt oder in einem Bereich. Dieser Punkt oder der Bereich liegt bevorzugt im Bereich des Kopfes der Bedienperson. Gegebenenfalls liegt jedoch dieser Punkt oder der Bereich in einem Bereich entfernt vom Kopf der Person. Die Verläufe der Achsen sind insbesondere durch die Eigenschaften des zu simulierenden Fluggerätes bestimmt.

Gegebenenfalls ist die Parallelkinematikanordnung derart ausgestaltet oder angepasst, dass die vorderen Linearbewegungsvorrichtungen einen erhöhten Hub oder eine vergrößerte Bewegungsfreiheit der Simulatorkabine ermöglichen. Als vorne wird in allen Ausführungsformen jene Richtung bezeichnet, die in der Grundstellung des Simulators für die Bedienperson vorneliegend ist. Beispielsweise ist bei einer Ausgestaltung als Hexapod vorne ein zentral angeordnetes Linearbewegungsvorrichtungspaar vorgesehen. Im hinteren Bereich der Parallelkinematikanordnung sind zwei Linearbewegungsvorrichtungen seitlich beabstandet von der lotrechten Mittellängsebene angeordnet. Gegebenenfalls ist die Simulatorkabine jedoch auch um 90°, 180° oder um einen beliebigen anderen Winkel zu dieser Konfiguration verdreht. Die vorderen Linearbewegungsvorrichtungen sind dabei immer jene Linearbewegungsvorrichtungen, die in der Grundstellung aus der Sicht der Bedienperson vorne liegend angeordnet sind.

Gegebenenfalls kann somit die Simulatorkabine in ihrer Grundstellung vorne zwei Linearbewegungsvorrichtungen, insbesondere ein Linearbewegungsvorrichtungspaar aufweisen und hinten vier Linearbewegungsvorrichtungen, insbesondere zwei Linearbewegungsvorrichtungspaare aufweisen.

In einer 180° verdrehten Konfiguration kann die Simulatorkabine vorne mit vier Linearbewegungsvorrichtungen, insbesondere mit zwei Linearbewegungsvorrichtungspaaren, und hinten mit zwei Linearbewegungsvorrichtungen, insbesondere mit einem Linearbewegungsvorrichtungspaar, ausgestattet sein.
Diese beiden Konfigurationen gelten insbesondere für eine als Hexapod ausgestaltete Parallelkinematikanordnung. Bevorzugt ist die Simulatorkabine in der Grundstellung symmetrisch auf dem Hexapod oder auf der Parallelkinematikanordnung positioniert, sodass bei einer Rollbewegung um die Rollachse die Bewegungsfreiheit nach links und nach rechts symmetrisch ausgebildet ist.

In weiterer Folge wird die Erfindung anhand der Figuren weiter beschrieben, wobei Fig. 1 eine schematische Schrägansicht einer Parallelkinematikanordnung, die Fig. 2a, 2b, 2c und 2d schematische Seitenansichten von unterschiedlichen Ausführungsformen erfindungsgemäßer Flugsimulatoren und jeweils darunterliegend eine schematische Ansicht der Anbringungspunkte der Parallelkinematikanordnungen zeigen, Fig. 3 eine schematische Seitenansicht einer möglichen Ausführungsform der Erfindung zeigt und Fig. 4 ein exemplarisches Regelungsmodell für eine erfindungsgemäße Vorrichtung zeigt.
Wenn nicht anders angegeben, so entsprechen die Bezugszeichen folgenden Komponenten: Simulatorkabine 1, Sitz 2, Bedienperson 3, Bildanzeigevorrichtung 4, Bedienelement 5, Parallelkinematikanordnung 6, Basis 7, Linearbewegungsvorrichtung 8, Trägerelement 9, Boden 10, Rollachse 11, erster Nickwinkel 12, zweiter Nickwinkel 13, Differenzwinkel 14, Nickachse 15, Länge (der Linearbewegungsvorrichtung) 16, vordere Linearbewegungsvorrichtung 17, hintere Linearbewegungsvorrichtung 18, Drehteller 19, Gierachse 20, Keilanordnung 21, Flugmodell 22, Wahrnehmungsmodell 23, Zielfunktion 24, Beschränkung(en) 25, Optimalsteuer- oder Optimalregelalgorithmus 26, Wahrnehmungsmodell 27, Simulatorkinematikmodell 28, zu regelnde Komponenten des Flugsimulators 29, optionale Rückführung 30, Steuereingaben 31.

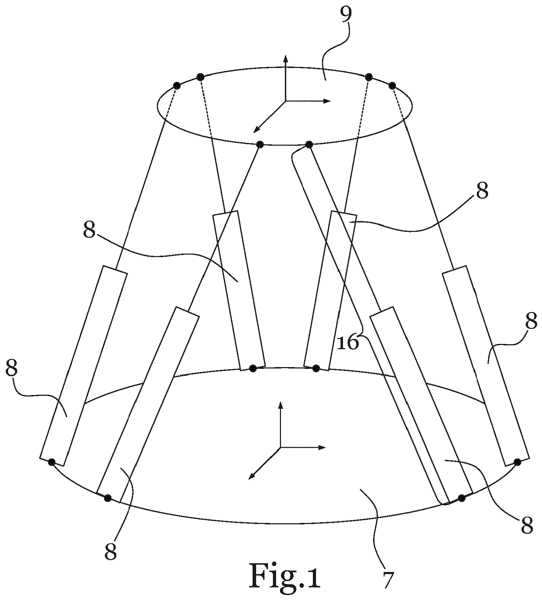

Fig. 1 zeigt eine schematische Schrägansicht eines herkömmlichen Hexapods und insbesondere der kinematischen Konfiguration eines herkömmlichen Hexapods, wobei dieser Hexapod gegebenenfalls als Parallelkinematikanordnung 6 in einem erfindungsgemäßen Flugsimulator zum Einsatz kommen kann.

Die Parallelkinematikanordnung 6 umfasst eine Basis 7, ein Trägerelement 9 und mehrere Linearbewegungsvorrichtungen 8. Die Linearbewegungsvorrichtungen 8 weisen jeweils eine veränderbare Länge 16 auf. Die Linearbewegungsvorrichtungen 8 sind in allen Ausführungsformen beispielsweise als Hydraulikzylinder ausgebildet. Gegebenenfalls können diese Linearbewegungsvorrichtungen 8 in allen Ausführungsformen jedoch auch als elektrisch angetriebene Linearbewegungsvorrichtungen oder gegebenenfalls als pneumatisch angetriebene Linearbewegungsvorrichtungen ausgebildet sein. Die Linearbewegungsvorrichtungen 8 können gesteuert oder geregelt von einer minimalen Länge auf eine maximale Länge ausgefahren werden. Auch in jeder Zwischenstellung können die Linearbewegungsvorrichtungen 8 angehalten werden, sodass eine gewisse Länge 16 gegeben ist. Durch die gesteuerte Längenänderung der Linearbewegungsvorrichtungen 8 kann das Trägerelement 9 gegenüber der Basis bewegt werden. Insbesondere ist eine Neigung des Trägerelements 9 gegenüber der Basis 7 um drei Drehachsen und eine translatorische Bewegung entlang dreier Freiheitsgrade möglich. Die Linearbewegungsvorrichtungen 8 greifen gegebenenfalls entlang eines Kreises am Trägerelement 9 und/oder an der Basis 7 an. Insbesondere können diese Angriffspunkte regelmäßig, symmetrisch, drehsymmetrisch, rotationssymmetrisch oder in einem vorbestimmten Muster an der Basis 7 und/oder an dem Trägerelement 9 vorgesehen sein. Beispielsweise sind jeweils zwei Linearbewegungsvorrichtungen 8 paarweise angeordnet, sodass ein Linearbewegungsvorrichtungspaar gebildet ist. Die beiden Linearbewegungsvorrichtungen 8 eines Linearbewegungsvorrichtungspaares stehen bevorzugt nicht parallel zueinander - insbesondere stehen sie windschief oder geneigt zueinander.

Gegebenenfalls sind in allen Ausführungsformen bei einer symmetrischen Parallelkinematikanordnung 6 bzw. bei einem symmetrischen Hexapod alle Linearbewegungsvorrichtungen 8 baugleich oder mit gleicher Länge bzw. mit gleichem Längenbereich ausgebildet. So weisen die Linearbewegungsvorrichtungen 8 alle eine minimale Länge und eine maximale Länge auf, wobei diese minimalen und maximalen Längen gegebenenfalls bei allen Linearbewegungsvorrichtungen 8 gleich sein können. Die Basis 7 ist bevorzugt bodenstehend ausgebildet oder mit dem Boden verbunden. Das Trägerelement 9 ist bevorzugt dazu eingerichtet, das zu bewegende Objekt, beispielsweise die Simulatorkabine 1, zu tragen. Insbesondere ist die Simulatorkabine 1 (nicht dargestellt) mit dem Trägerelement 9 verbunden. Bevorzugt ist die Parallelkinematikanordnung 6 bodenstehend ausgebildet. Gegebenenfalls ist die Basis 7 mit dem Boden 10 verbunden. Der Boden 10 kann in allen Ausführungsbeispielen beispielsweise der Fußboden einer Simulatorhalle oder ein Fundament sein.

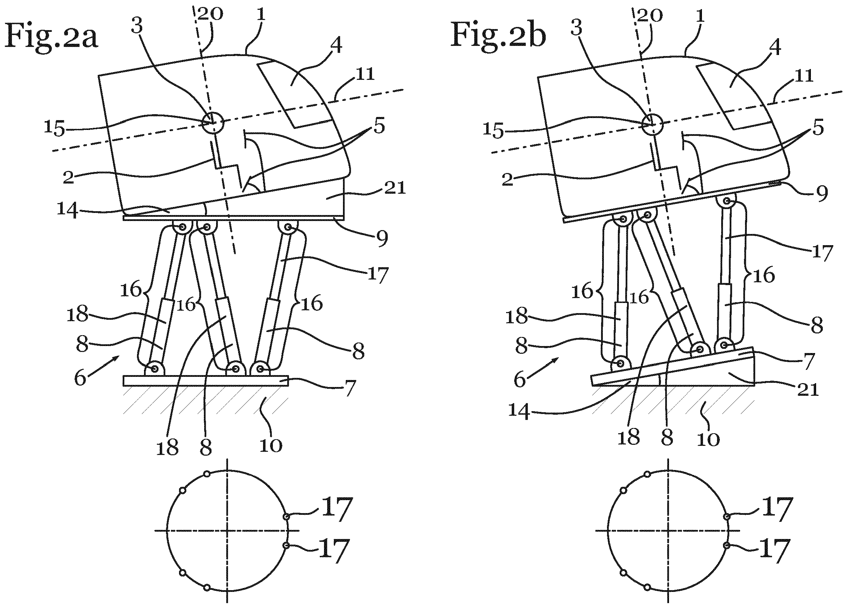

Fig. 2a zeigt eine mögliche Ausführungsform des erfindungsgemäßen Flugsimulators in einer schematischen Seitenansicht. Eine Simulatorkabine 1 mit einem Sitz 2 für eine Bedienperson 3, einer Bildanzeigevorrichtung 4 sowie mit Bedienelementen 5 ist auf einer Parallelkinematikanordnung 6 angeordnet. Der Sitz dient zur Aufnahme der Bedienperson 3. Die Bildanzeigevorrichtung 4 ist dazu geeignet und/oder eingerichtet, die simulierte Umgebung und/oder andere Informationen anzuzeigen. Die Bedienelemente 5 sind dazu geeignet und/oder eingerichtet, Steuersignale zu generieren, sodass die Bedienperson auf die Simulation Einfluss nehmen kann. Beispielsweise sind die Bedienelemente 5 in allen Ausführungsformen den Bedienelementen des zu simulierenden Fluggeräts nachgebildet. Durch die Betätigung dieser Bedienelemente 5 kann das simulierte Fluggerät in der simulierten Umgebung bewegt und/oder gesteuert werden. Über eine Datenverarbeitungsanlage können die Steuerdaten verarbeitet werden, um die Parallelkinematikanordnung 6 zu steuern oder zu regeln. Durch Veränderung der Lage bzw. der Neigung der Simulatorkabine 1 und des darin vorgesehenen Sitzes 2, können der Bedienperson 3 Beschleunigungszustände vorgespielt werden, die denen der simulierten Flugsituationen ähneln oder gleichen. In der vorliegenden Ausführungsform ist die Parallelkinematikanordnung 6 als symmetrische Parallelkinematikanordnung 6 ausgebildet. Sie umfasst eine Basis 7, die im Wesentlichen waagrecht dem Boden 10 folgend ausgebildet ist. Ferner umfasst die Parallelkinematikanordnung 6 ein Trägerelement 9, das in der vorliegenden Stellung ebenfalls im Wesentlichen waagrecht verläuft. Insbesondere verläuft das Trägerelement 9 im Wesentlichen parallel zur Basis 7. Diese Stellung der Parallelkinematikanordnung 6 entspricht der Parallelkinematikgrundstellung. In dieser Stellung weisen bevorzugt alle Linearbewegungsvorrichtungen 8 dieselbe Länge 16 auf. Die Koppelungsstellen der Linearbewegungsvorrichtungen 8 sind an der Basis 7 bzw. am Trägerelement 9 bevorzugt symmetrisch, gleichmäßig oder regelmäßig am Umfang verteilt. Durch Längenänderungen der Linearbewegungsvorrichtungen 8 kann die Position der Simulatorkabine 1 verändert werden. In der vorliegenden Ausführungsform ist zwischen der Simulatorkabine 1 und dem Trägerelement 9 eine Keilanordnung 21 vorgesehen. Diese Keilanordnung 21 ist schematisch als Keil dargestellt. Sie kann jedoch in allen Ausführungsformen eine als Keil wirkende Anordnung sein. Beispielsweise kann die Simulatorkabine 1 eine starre Bodenplatte oder einen starren Bodenträger umfassen, der auf einer Seite, insbesondere im vorderen Bereich, über ein Distanzelement beabstandet von dem Trägerelement 9 vorgesehen ist, sodass die Simulatorkabine 1 gegenüber dem Trägerelement 9 schräggestellt ist. Diese Schrägstellung erfolgt bevorzugt um die Nickachse oder um eine zur Nickachse parallelen Achse. Der WinKel dieser Schrägstellung entspricht gegebenenfalls in allen Ausführungsformen dem Differenzwinkel 14.

Die Simulatorkabine 1 befindet sich in der dargestellten Stellung der Fig. 2a nicht in ihrer Grundstellung, sondern ist um einen gewissen Winkel um die Nickachse nach hinten geneigt, und insbesondere um den Differenzwinkel 14 nach hinten geneigt. Die Nickachse 15 verläuft in dieser Ansicht projizierend. Sie befindet sich insbesondere im Schnittpunkt der Rollachse 11 und der Gierachse 20.

Diese Stellung entspricht beispielsweise einer Stellung, durch die in der simulierten Umgebung eine longitudinale Beschleunigung des Fluggeräts oder ein Steigflug des Fluggeräts simuliert wird.

Die Parallelkinematikanordnung 6 umfasst in der vorliegenden Ausführungsform sechs Linearbewegungsvorrichtungen 8, womit die Parallelkinematikanordnung 6 als Hexapod ausgebildet ist. Drei der Linearbewegungsvorrichtungen 8 sind nicht dargestellt, da sie fluchtend hinter den drei sichtbaren Linearbewegungsvorrichtungen 8 angeordnet sind.

Die Merkmale der Fig. 2b entsprechen im Wesentlichen den Merkmalen der Fig. 2a, wobei die Keilanordnung 21 gemäß der Ausführungsform der Fig. 2b zwischen Boden 10 und Basis 7 vorgesehen ist. In dieser Ausführungsform bzw. in dieser Stellung befindet sich die Parallelkinematikanordnung 6 in ihrer Parallelkinematikgrundstellung, in der, wie auch in Fig. 2a, alle Linearbewegungsvorrichtungen 8 dieselbe Länge 16 aufweisen. In der vorliegenden Ausführungsform ist die gesamte Parallelkinematikanordnung 6 um einen Winkel geneigt, wobei die Parallelkinematikanordnung 6 um die Nickachse bzw. um eine zur Nickachse parallelen Achse geneigt ist. Insbesondere ist die Parallelkinematikanordnung 6 um den Differenzwinkel 14 nach hinten geneigt. Die Simulatorkabine 1 befindet sich nicht in ihrer Grundstellung, sondern ist ebenfalls nach hinten geneigt. Die Parallelkinematikanordnung 6 der Fig. 2b ist ebenfalls als symmetrische Parallelkinematikanordnung ausgebildet.

Zur Simulation eines stationären Geradeausflugs, bei der sich die Simulatorkabine 1 in ihrer Grundstellung befindet, wird nun die Länge der Linearbewegungsvorrichtungen 8 derart verändert, dass die Simulatorkabine 1 bzw. die Bedienperson 3 im Wesentlichen waagrecht gestellt ist. Insbesondere bei den Konfigurationen gemäß den Fig. 2a bzw. 2b werden die vorderen Linearbewegungsvorrichtungen 17 gegenüber den hinteren Linearbewegungsvorrichtungen 18 derart verkürzt, sodass die Simulatorkabine 1 in ihrer Grundstellung angeordnet ist. In dieser Grundstellung verläuft die Rollachse 1 bevorzugt waagrecht. Die Gierachse 20 verläuft bevorzugt im Wesentlichen lotrecht.

Durch diese Konfiguration befindet sich die Simulatorkabine 1 in ihrer Grundstellung und die Parallelkinematikanordnung 6 außerhalb der Parallelkinematikgrundstellung, womit der erfinderische Effekt erzielt wird, dass die Bewegungsfreiheit einer Neigung um die Nickachse 15 nach oben vergrößert ist, wobei bei der vorliegenden Konfiguration der Fig. 2a und der Fig.2b gegebenenfalls die Bewegungsfreiheit einer Neigung um die Nickachse nach unten verkleinert ist. Insbesondere ist die Bewegungsfreiheit einer positiven Neigung um die Nickachse nach oben um den Differenzwinkel 14 vergrößert und nach unten um den Differenzwinkel verkleinert.

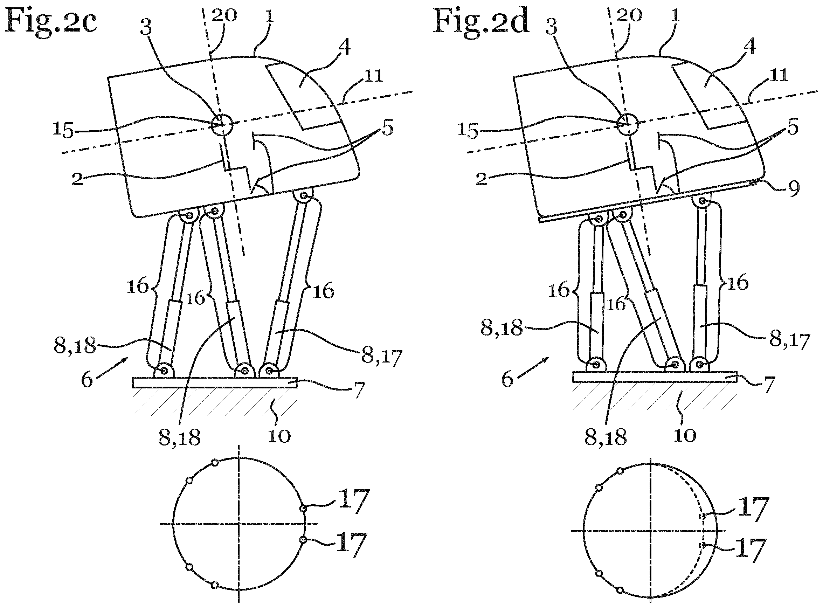

Fig. 2c zeigt eine weitere Ausführungsform eines Flugsimulators in einer schematischen Seitenansicht, wobei die Elemente und Merkmale der Fig. 2c im Wesentlichen den Merkmalen der Fig. 2a und 2b entsprechen. Gemäß der vorliegenden Ausführungsform der Fig. 2c sind die vorderen Linearbewegungsvorrichtungen 17 länger ausgeführt als die hinteren Linearbewegungsvorrichtungen 18. Insbesondere bedeutet dies, dass die maximale Längen der vorderen Linearbewegungsvorrichtungen 17 größer sind, als die maximalen Längen der hinteren Linearbewegungsvorrichtungen 18. Auch dadurch kann die Bewegungsfreiheit um die Nickachse nach oben verbessert werden.

Fig. 2d zeigt eine weitere Ausführungsform eines erfindungsgemäßen Flugsimulators in einer schematischen Seitenansicht, wobei die Komponenten im Wesentlichen den Komponenten der vorangegangenen Ausführungsformen entsprechen. In der vorliegenden Ausführungsform weisen alle Linearbewegungsvorrichtungen 8 dieselbe maximale Länge auf. Jedoch ist der Aufstellwinkel der vorderen Linearbewegungsvorrichtungen 17 steiler als der Aufstellwinkel der hinteren Linearbewegungsvorrichtungen 17. Auch dadurch kann die Bewegungsfreiheit nach oben vergrößert werden. Insbesondere in der unterhalb der Schrägansicht dargestellten schematischen Darstellung der Angriffspunkte der Linearbewegungsvorrichtungen 8 ist dargestellt, dass die Angriffspunkte der vorderen Linearbewegungsvorrichtungen näher ins Zentrum gerückt sind, um einen steileren Aufstellwinkel zu erzielen.

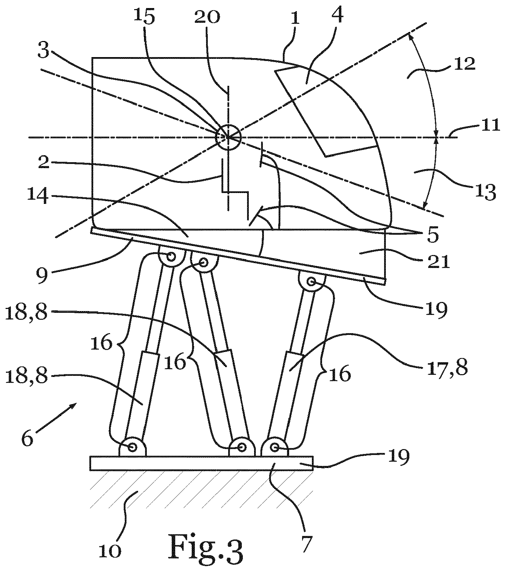

Fig. 3 zeigt eine schematische Seitenansicht der Ausführungsform der Fig. 2a, wobei sich die Simulatorkabine 1 in ihrer Grundstellung befindet. Die Komponenten und Merkmale des in Fig. 3 dargestellten Flugsimulators entsprechen im Wesentlichen den Merkmalen der vorangegangenen Ausführungsformen. Die Rollachse 11 verläuft in der vorliegenden Darstellung im Wesentlichen waagrecht. Die Parallelkinematikanordnung 6 befindet sich in einer von der Parallelkinematikgrundstellung abweichenden Stellung. Insbesondere ist das Trägerelement 9 um einen gewissen Winkel, insbesondere um den Differenzwinkel 14, geneigt.

Durch diese Konfiguration kann die Simulatorkabine 1, bzw. die Rollachse 11 von einem im Wesentlichen waagrechten Verlauf um einen ersten Nickwinkel 12 nach oben geneigt und um einen zweiten Nickwinkel 13 nach unten geneigt werden, wobei der erste Nickwinkel 12 bevorzugt größer ist als 25°. Insbesondere ist der Betrag des ersten Nickwinkels 12 größer als der Betrag des zweiten Nickwinkels 13, wodurch sich eine asymmetrische Bewegungsfreiheit der Simulatorkabine bei einer Neigung um die Nickachse 15 ergibt.

Gegebenenfalls ist ein Drehteller bzw. ein Drehring 19 vorgesehen. Über diesen Drehteller oder Drehring kann die Simulatorkabine 1 gegenüber dem Boden 10 verdreht werden. Der Drehteller 19 kann beispielsweise zwischen Simulatorkabine 1 und Trägerelement 9 vorgesehen sein. Gegebenenfalls ist der Drehteller 19 zwischen dem Boden 10 und der Basis 7 vorgesehen.

Fig. 4 zeigt einen schematischen Aufbau eines Regelungsmodells, insbesondere eines Regelkreises zur Regelung und/oder Steuerung eines Flugsimulators, wobei der Regelkreis bevorzugt zumindest ein Teil der Datenverarbeitungseinrichtung, und insbesondere eine Steuerungseinrichtung und/oder eine Regelungseinrichtung ist, die bevorzugt computerimplementiert ausgebildet ist. Das Regelungsmodell bzw. der Regelkreis ist dazu geeignet, einen Flugsimulator in Echtzeit, insbesondere einen sogenannten "Full Flight Flugsimulator" zu regeln bzw. die Bewegungen des Simulators zu steuern. Ein derartiges Regelungsmodell kann für einen Flugsimulator gemäß den vorliegenden Ausführungsformen eingesetzt werden.

Jedoch kann das Regelungsmodell auch zur Steuerung und/oder Regelung von anderen Bewegungssimulatoren, wie beispielsweise von Einarmzentrifugen, von Zweiarmzentrifugen mit verfahrbarem Schlitten, von Einarmzentrifugen mit verfahrbarem Schlitten oder von anderen Bewegungssimulatoren eingesetzt werden. Zur Simulation eines beliebigen Fortbewegungsmittels, wie beispielsweise eines Fahrzeugs, eines Schiffs, eines Helikopters etc. kann in allen Ausführungsformen des Regelungsmodells statt dem Flugmodell ein dem zu simulierenden Fortbewegungsmittel entsprechendes Modell eingesetzt werden. Zur Simulation von verschiedenen Flugzeugtypen oder eines speziellen Flugzeugtyps kann das Flugmodell dem jeweiligen zu simulierenden Flugzeug entsprechen oder an dieses angepasst sein.

Durch Austausch des Bewegungssimulators, bzw. der zu regelnden Komponenten des Flugsimulators 29 und des Simulatorkinematikmodells 28 kann der Bewegungsfilter bzw. das Regelungsmodell auf alle beliebigen Flugsimulatoren oder Bewegungssimulatoren angewendet werden. Bevorzugt werden auch die Beschränkungen 25 angepasst.

Das Regelungsmodell umfasst bevorzugt Steuereingaben 31, die insbesondere durch das Bedienelement 5 oder durch die Bedienelemente 5 erzeugt werden, ein Flugmodell 22, ein Wahrnehmungsmodell 23, eine Zielfunktion 24, einen Optimalsteueralgorithmus oder einen Optimalregelungsalgorithmus 26, Beschränkungen 25, ein Wahrnehmungsmodell 27 und ein Simulatorkinematikmodell 28. Die zu steuernden oder zu regelnden Komponenten des Flugsimulators 29 sind mit dem Regelkreis verbunden. Ein Vorteil dieses auch als Bewegungsfilter bezeichneten Regelungsmodells ist es, dass die Abweichung zwischen realer Bewegung und simulierter Bewegung entsprechend der Zielfunktion auf ein Minimum reduziert wird. Ausgehend von den Steuerdaten 31 der Bedienperson berechnet das Flugmodell 22 die auf die Bedienperson wirkenden Bewegungen, die im Wahrnehmungsmodell 23 zur Berechnung der von dem Piloten wahrgenommenen Bewegungen weiterverarbeitet werden. Die zu simulierenden Bewegungen werden in entsprechende Vorgaben fur den Flugsimulator umgewandelt und insbesondere dem Simulatorkinematikmodell 28 zugeführt, dessen Ausgangsdaten wiederum durch ein Wahrnehmungsmodell 27 in die von der Bedienperson wahrgenommenen oder wahrzunehmenden Bewegungen weiterverarbeitet werden. Die Differenz der Ausgangsdaten der beiden Wahrnehmungsmodelle 23 und 27 wird optimiert oder minimiert, sodass der gesamte Bewegungsfilter bzw. das gesamte Regelungsmodell eine optimale Simulation bewirkt. Durch die aktive Berücksichtigung der Beschränkungen 25 kann der Arbeitsraum des Simulators bestmöglich ausgenutzt werden. Eine Auslegung anhand von "worst case-Szenarien" ist dadurch nicht mehr zwingend erforderlich. Die Beschränkungen sind beispielsweise kinematische Limits der Bewegungsplattform bzw. des Flugsimulators.

Gegebenenfalls sind die beiden Wahrnemungsmodelle 23, 27 in allen Ausführungsformen identisch.

Gegebenenfalls sind real auftretende Bewegungsdaten des Flugsimulators über eine Rückführung 30 an den Regelkreis rückgeführt. Gegebenenfalls können die Wahrnehmungsmodelle auch entfallen, womit die Ausgangsdaten des Flugmodells 22 und/oder des Simulatorkinematikmodells 28 direkt der Zielfunktion 24 zugeführt werden. Die strichlierten Linien entsprechen somit alternativen Ausführungsformen, die zusätzlich zu den betreffenden durchgezogenen Linien oder als Ersatz vorgesehen sein können.

Das in Fig. 4 und in der weiteren Beschreibung offenbarte Regelungsmodell erlaubt eine Echtzeitregelung von Flugsimulatoren, bei der eine wahrnehmungsgetreue Simulation verbessert bzw. ermöglicht ist.

Die Erfindung ist insbesondere durch die Merkmale der Patentansprüche bestimmt und nicht auf die gezeigten Ausführungsbeispiele beschränkt. Insbesondere sind auch Kombinationen der in den Ausführungsformen offenbarten Merkmalen Teil der Erfindung. So können beispielsweise Parallelkinematikanordnungen eingesetzt werden, deren Linearbewegungsvorrichtungen gleichartig oder baugleich ausgebildet sind. Insbesondere können die minimalen Längen und die maximalen Längen aller Linearbewegungsvorrichtungen in etwa gleich sein. Auch bei dieser Ausführungsform können die vorderen Linearbewegungsvorrichtungen steil aufgestellt werden, sodass eine Vergrößerung der Bewegungsfreiheit nach oben um die Nickachse erzielt wird. Zusätzlich können auch eine Schrägstellung der Simulatorkabine zum Trägerelement und/oder eine Schrägstellung der gesamten Parallelkinematikanordnung vorgesehen sein. Auch eine Schrägstellung von Teilen der Parallelkinematikanordnung in Kombination mit verlängerten vorderen Linearbewegungsvorrichtungen entspricht gegebenenfalls dem Erfindungsgedanken.

Zur weiteren Beschreibung einer möglichen Anwendung wird ein exemplarischer Simulationsablauf beschrieben:
Ausgangssituation ist beispielsweise der Reiseflug eines zivilen Verkehrsflugzeugs. Durch verschiedenartige Gründe, wie beispielsweise atmosphärische Störungen, Sensordefekte, Pilotenfehler etc, kann in einem ersten Schritt die Fluggeschwindigkeit in der Simulation unzulässig reduziert werden. Dies hat zur Folge, dass der Anstellwinkel erhöht werden muss, damit ein Sinkflug des Flugzeugs verhindert werden kann. Führt diese Situation nun zu einem voll entwickelten Strömungsabriss, einem sogenannten Stall, so können Anstellwinkel von beispielsweise über 25° auftreten. Dieser Anstellwinkel wird bei der Simulation nahezu exakt von dem Flugsimulator nachgebildet, um eine realistische Simulation zu erzielen. Bevorzugt ist eine Simulation eines Strömungsabrisses bis etwa 10° über den kritischen Anstellwinkel hinaus für ein sinnvolles Training erforderlich. Somit sollte der Flugsimulator dazu geeignet sein, Anstellwinkel von über 25° und bevorzugt von etwa 30°-35° zu realisieren bzw. zu simulieren. Der Pilot wird als Reaktion auf den Strömungsabriss nun das Fluggerät nach unten in eine Art Sturzflug, beispielsweise auf etwa -15° bis -20° überführen, sodass sich die Anströmverhältnisse als auch die Fluggeschwindigkeit wieder auf den Normbereich einstellen. Danach erfolgt ein gezieltes und behutsames Abfangen des Fluggeräts. Bei diesem Manöver treten beispielsweise maximale Anstellwinkel um die Nickachse von +30° bis +35° und von -15° bis -20° auf. Diese werden nahezu exakt auf dem Flugsimulator nachgebildet. Eine exakte Nachbildung der Anstellwinkel tritt in der Praxis oft nicht auf, da auch andere auf die Person wirkende Beschleunigungen, wie beispielsweise eine Geschwindigkeitsreduktion, also ein Verzögerung, oder eine Geschwindigkeitssteigerung, also eine Beschleunigung, über eine Schrägstellung der Simulatorkabine simuliert werden. Diese Schrägstellungen liegen beispielsweise im Bereich von maximal 3-5°, die der simulierten Fluglage abgezogen oder addiert werden. Gegebenenfalls ist der Flugsimulator in allen Ausführungsformen derart ausgestaltet, dass die Simulatorkabine eine maximale Nickstellung aufweist, in der die Rollachse ausgehend vom waagrechten Verlauf um einen ersten oder zweiten Nickwinkel im Rahmen der kinematischen Möglichkeiten der Parallelkinematikanordnung gegebenenfalls unter Einhaltung der Steuerreserven nach oben oder nach unten geneigt ist. Die kinematischen Möglichkeiten sind beispielsweise durch den Aufbau der Parallelkinematikanordnung begrenzt. Jedoch werden bei Flugsimulatoren diese kinematischen Möglichkeiten nur teilweise ausgenützt, sodass eine Steuerreserve erhalten bleibt.

Zur Steuerung des Flugsimulators sind in der Simulatorkabine Bedienelemente vorgesehen. Diese Bedienelemente sind beispielsweise Steuerelementen des zu simulierenden Fluggeräts nachgebildet. In allen Ausführungsformen kann in der Simulatorkabine ein Cockpit vorgesehen sein, das dem Cockpit des zu simulierenden Fluggeräts entspricht.

Im Simulator werden durch die Bedienung der Bedienelemente Steuersignale an eine Datenverarbeitungseinrichtung, insbesondere an eine Steuerungseinrichtung und/oder eine Regelungseinrichtung geleitet. Die Datenverarbeitungseinrichtung, die Steuerungseinrichtung und/oder die Regelungseinrichtung können einen oder mehrere programmgesteuerte Computer umfassen und zumindest teilweise gemäß Fig. 4 ausgestaltet sein. Insbesondere ist ein computerimplementiertes mathematisches Flugmodell hinterlegt, das einem virtuellen Bewegungsmodell des zu simulierenden Fluggerätes entspricht. Die Simulationssteuerdaten, wie beispielsweise die Daten der Bedienelemente oder gegebenenfalls auch Störeinflüsse wie beispielsweise Umwelteinflüsse oder gezielte künstliche Störeinflüsse werden an dieses computerimplementierte Flugmodell übermittelt, wo die Reaktionen des Modells auf die Steuerungsdaten, bevorzugt in Echtzeit, errechnet werden. Die Daten des Flugmodells enthalten beispielsweise Beschleunigungs-, Geschwindigkeits- und/oder Lagedaten, die auf die Bedienperson in der simulierten Umgebung, aber auch in der Realität wirken würden.

Bei der Simulation ist es vorrangig wichtig, der Person die Beschleunigungsparameter oder die Lageparameter so wahrnehmungsgetreu wie möglich zu simulieren. Zu diesem Zweck kann in der Datenverarbeitungseinrichtung auch ein gegebenenfalls computerimplementiertes Wahrnehmungsmodell hinterlegt sein. Dieses Modell umfasst Parameter, wie gewisse Beschleunigungszustände oder Änderungen von der Bedienperson wahrgenommen werden. Gegebenenfalls werden somit die Steuerungsdaten der Bedienelemente an das Flugmodell und an das Wahrnehmungsmodell weitergegeben und dort bevorzugt in Echtzeit verarbeitet um eine wahrnehmungsgetreue Steuerung- bzw. Regelung des Simulators zu bewirken. Diese Regelung ist bevorzugt eine Echtzeitregelung, die insbesondere auch Daten der kinematischen Beschränkung der Parallelkinematikanordnung und des Flugsimulators berücksichtigt. Die durch die Regelungseinrichtung ausgegebenen Daten werden bevorzugt an die Parallelkinematikanordnung geleitet, um deren Bewegung zu steuern oder zu regeln.

Zusätzlich kann auch ein gegebenenfalls computerimplementiertes Modell der Simulatorkinematik und/oder der Bewegungscharakteristik der Parallelkinematikanordnung hinterlegt sein. Die Steuerdaten werden diesem Modell zugeführt, um die Bewegung des Simulators in dem computerimplementierten Modell zu simulieren. Auch die Simulation der Parallelkinematikanordnung und die Ausgangsgrößen dieser Simulation können einem computerimplementierten Wahrnehmungsmodell zugeführt werden. Zur Optimierung der Simulation kann in weiterer Folge die Differenz zwischen den Ausgangsdaten des Wahrnehmungsmodells des Flugmodells und des Wahrnehmungsmodells des Simulatormodells optimiert bzw. minimiert werden. Die optimierten Steuerungsdaten werden dann zur Steuerung der realen Parallelkinematikanordnung verwendet. Gegebenenfalls werden auch reale Daten des Flugsimulators, insbesondere Lagedaten oder Beschleunigungsdaten rückgeführt und über das Wahrnehmungsmodell an die Regelungseinrichtung rückgeführt. Die Parameter des Wahrnehmungsmodells können individuell an die Bedienperson angepasst werden. Die beiden Wahrnehmungsmodelle können identisch ausgebildet sein.

In einem beispielhaften Regelungsmodell, wie beispielsweise in Fig. 4 beschrieben, werden somit die Simulatorsteuerdaten der Bedienelemente an ein gegebenenfalls computerimplementiertes Flugmodell geleitet, aus denen dann die Reaktionen des simulierten Fluggeräts auf die Bedienung errechnet werden. Die Ausgangsgrößen sind beispielsweise Lagen- oder Beschleunigungsdaten. Diese werden dem gegebenenfalls computerimplementierten Wahrnehmungsmodell zugeführt, um Parameter zu erhalten, die den Wahrnehmungen der Bedienperson entsprechen. Der Regelkreis umfasst bevorzugt auch ein gegebenenfalls computerimplementiertes Modell der Simulatorkinematik, dessen Ausgangsdaten wiederum einem gegebenenfalls computerimplementierten Wahrnehmungsmodell zugeführt werden, dessen Ausgangsdaten im Wesentlichen den Wahrnehmungsdaten entsprechen, die durch die Simulatorkinematik erzeugt werden. Die Differenz zwischen den Wahrnehmungsdaten bedingt durch die Steuereingaben und den Wahrnehmungsdaten der Simulatorkinematik wird bevorzugt minimiert. Ferner bilden diese Daten eine Eingangsgröße für den Regelkreis. Der Regelkreis ist mit der Parallelkinematikanordnung zur Steuerung der Parallelkinematikanordnung verbunden. Ziel des Algorithmus ist nicht vorrangig die Minimierung der physikalischen Bewegungsabweichung, sondern die Minimierung der Empfindungsabweichung unter Einhaltung notwendiger Beschränkungen, wobei auch physikalische Bewegungsabweichungen minimiert werden können. Durch aktive Berücksichtigung der Beschränkungen kann der Arbeitsraum des Simulators bzw. der Parallelkinematikanordnung bestmöglich ausgenützt werden. Eine Auslegung anhand "worst-case-Szenarien" ist nicht mehr erforderlich. Anstatt der physikalischen Bewegungsnachbildung wird die Bewegungsempfindung nachgebildet, wodurch ein realistischeres Simulationsergebnis erzielt wird. Die Empfindung ist ein subjektives Kriterium, das heißt, jeder Mensch nimmt Bewegung etwas unterschiedlich wahr. Das Wahrnehmungsmodell spiegelt eine Grundcharakteristik der menschlichen Wahrnehmung wider und kann mittels individueller Parametrierung an die individuelle Wahrnehmung angepasst werden. Der Anlagenoperator hat gegebenenfalls die Möglichkeit, auch während der Simulation auf Bedienperson- Feedback bzw. Piloten-Feedback zu reagieren um das Anlagenverhalten entsprechend anpassen zu können. Der Bewegungsfilter ist nicht an eine spezifische kinematische Struktur der Bewegungsplattform gebunden. Durch Anpassungen kann der Algorithmus auch auf andere Plattformen, beispielsweise auf Einarmzentrifugen oder auf Mehrarmzentrifugen übertragen werden. Im Gegensatz zum Offline Mode kann in der Echtzeitanwendung der vorliegenden Regelung, insbesondere der Regelung gemäß Fig. 4, der Pilot das Flugzeug aktiv steuern, was die in der Bewegungssimulation übliche Bezeichnung "Closed loop Mode" begründet. Anhand der Steuereingaben der Bedienperson berechnet sich eine Referenztrajektorie, welche aber gegebenenfalls nur bis zum aktuellen Zeitpunkt bekannt ist - ein zukünftiger Verlauf kann gegebenenfalls prognostiziert werden. Die Bahn der Bewegungsplattform kann entsprechend dieser Vorgabe in Echtzeit berechnet werden. Die Behandlung dieser zwei Anforderungen - einerseits die Optimierungsaufgabe in Echtzeit lösen zu können und andererseits einer unbekannten Referenzbewegung bestmöglich folgen zu können, ist ein Vorteil der vorliegenden Regelung, insbesondere der Regelung gemäß Fig. 4. Das Echtzeitverfahren orientiert sich an der Idee der "modellbasierten prädiktiven Regelung" (engl. modelpredictive control, MPC), ein Regelungsverfahren, welches optimale Steuergrößen unter Nutzung eines Prozessmodells und Berücksichtigung von Beschränkungen berechnet. Dabei beschreibt die Bezeichnung MPC keinen speziellen Regelungsalgorithmus, sondern bezeichnet eine Klasse modellgestützter Regelungsverfahren, welche in Echtzeit ein dynamisches Optimierungsproblem auf einem bewegten Horizont lösen. Mit Verwendung eines Prozessmodells werden Auswirkungen aktueller und zukünftiger Stellgrößen prädiziert und entsprechend eines gewünschten Zielfunktionals optimiert.

## Patentansprüche

1. Full Flight Flugsimulator umfassend:
- eine Simulatorkabine (1), wobei in der Simulatorkabine ein Sitz (2) für eine Bedienperson (3), eine Bildanzeigevorrichtung (4) zur Anzeige der simulierten Umgebung, und mindestens ein Bedienelement (5) zur Erzeugung von Simulationssteuerdaten und insbesondere zur Steuerung des simulierten Fluggeräts und zur Einflussnahme auf die Simulation durch die Bedienperson (3) vorgesehen sind,
- eine Parallelkinematikanordnung (6), die eine Basis (7), ein Trägerelement (9) und mehrere Linearbewegungsvorrichtungen (8) umfasst, wobei das Trägerelement (9) über mindestens drei, bevorzugt sechs Linearbewegungsvorrichtungen (8) mit der Basis (7) verbunden ist, und wobei die Basis (7) mit dem Boden (10) und das Trägerelement (9) mit der Simulatorkabine (1) verbunden oder gekoppelt ist, sodass die Simulatorkabine (1) auf der Parallelkinematikanordnung (6) angeordnet ist,
**wobei** die Simulatorkabine (1) eine Grundstellung aufweist, die im Wesentlichen einem stationären Geradeausflug des simulierten Fluggeräts entspricht und in der die Rollachse (11) des simulierten Fluggeräts oder der Bedienperson (3) im Wesentlichen waagrecht verläuft,
**wobei** die Simulatorkabine (1) eine maximale positive Nickstellung aufweist, in der die Rollachse (11) ausgehend vom waagrechten Verlauf um einen ersten Nickwinkel (12) im Rahmen der kinematischen Möglichkeiten der Parallelkinematikanordnung (6) unter Einhaltung von gegebenenfalls vorgesehenen Steuerreserven weitestmöglich nach oben geneigt ist und die Bedienperson (3) dadurch nach hinten geneigt ist,
**wobei** die Simulatorkabine (1) eine maximale negative Nickstellung aufweist, in der die Rollachse (11) ausgehend vom waagrechten Verlauf um einen zweiten Nickwinkel (13) im Rahmen der kinematischen Möglichkeiten der Parallelkinematikanordnung (6) unter Einhaltung von gegebenenfalls vorgesehenen Steuerreserven nach unten geneigt ist und die Bedienperson (3) dadurch nach vorne geneigt ist, **dadurch gekennzeichnet,**
- **dass** der erste Nickwinkel (12) größer ist als 25°,
- **dass** die Parallelkinematikanordnung (6) eine Parallelkinematikgrundstellung aufweist, in der die Basis (7) und das Trägerelement (9) im Wesentlichen parallel verlaufen, und in der die Rollachse (11) um einen positiven Differenzwinkel (14) nach oben geneigt ist, und in der die Simulatorkabine (1) in einer von ihrer Grundstellung abweichenden Stellung angeordnet ist,
- **und dass** die Parallelkinematikanordnung (6) in einer von der Parallelkinematikgrundstellung abweichenden Stellung angeordnet ist, wenn die Simulatorkabine (1) in ihrer Grundstellung angeordnet ist.

2. Full Flight Flugsimulator nach Anspruch 1, **dadurch gekennzeichnet,**
- **dass** der Betrag des ersten Nickwinkels (12) größer ist als der Betrag des zweiten Nickwinkels (13),
oder dass der Betrag des ersten Nickwinkels (12) um einen Differenzwinkel (14) größer ist als der Betrag des zweiten Nickwinkels (13),
- und/oder dass die Neigung der Simulatorkabine um die Nickachse (15) oder um eine zur Nickachse (15) parallelen Achse zwischen der maximalen negativen Nickstellung und der maximalen positiven Nickstellung ausschließlich durch Betätigung der Parallelkinematikanordnung (6) erfolgt.

3. Full Flight Flugsimulator nach Anspruch 1 oder 2, **dadurch gekennzeichnet,**
- **dass** die Linearbewegungsvorrichtungen (8) als Linearbewegungsvorrichtungen (8) mit einer steuerbar oder regelbar veränderbaren Länge (16) ausgebildet sind, wobei die Länge (16) der Linearbewegungsvorrichtungen (8) zwischen oder im Bereich einer minimalen Länge und einer maximalen Länge liegt,
sodass das Trägerelement (9) relativ zur Basis (7) durch Längenänderungen der Linearbewegungsvorrichtungen (8) um mindestens zwei Achsen schwenkbar ist und gegebenenfalls drei Schwenkfreiheitsgrade und drei Translationsfreiheitsgrade aufweist,
- und/oder dass die Linearbewegungsvorrichtungen (8) paarweise angeordnet sind, wobei zwei ein Linearbewegungsvorrichtungspaar bildende Linearbewegungsvorrichtungen (8) zueinander schräggestellt sind, sodass insbesondere ein Hexapod gebildet ist.

4. Full Flight Flugsimulator nach einem der Ansprüche 1 bis 3, **dadurch gekennzeichnet,**
- **dass** die Basis (7) zum Trägerelement (9) um die Nickachse (15) oder um eine zur Nickachse (15) parallelen Achse geneigt ist, wenn die Simulatorkabine (1) in ihrer Grundstellung angeordnet ist,

5. Full Flight Flugsimulator nach einem der Ansprüche 1 bis 4, **dadurch gekennzeichnet,**
- **dass** die Basis (7) gegenüber einer waagrechten Ebene um einen positiven Differenzwinkel (14) nach oben geneigt ist,
- oder dass die Rollachse (11) gegenüber dem Verlauf des Trägerelements (9) um einen positiven Differenzwinkel (14) nach oben geneigt ist,
- oder dass die Basis (7) gegenüber einer waagrechten Ebene und die Rollachse (11) gegenüber dem Verlauf des Trägerelements (9) zusammen um einen positiven Differenzwinkel (14) nach oben geneigt sind,
wobei der Differenzwinkel (14) in einer Normalebene der Nickachse (15) angegeben ist.

6. Full Flight Flugsimulator nach einem der Ansprüche 1 bis 5, **dadurch gekennzeichnet,**
- **dass** zur geneigten Positionierung der Basis (7) gegenüber der waagrechten Ebene eine keilförmige oder eine keilförmig wirkende Keilanordnung (21) vorgesehen ist, die zwischen der Basis (7) und dem Boden (10) vorgesehen ist,
- und/oder dass zur geneigten Positionierung der Rollachse (11) gegenüber dem Verlauf des Trägerelements (9) eine keilförmige oder eine keilförmig wirkende Keilanordnung (21) vorgesehen ist, die zwischen der Simulatorkabine (1) und dem Trägerelement (9) vorgesehen ist,
- und/oder dass die Keilanordnung (21) eine starre Keilanordnung ist, deren Keilwinkel während der Simulation unverändert ist.

7. Full Flight Flugsimulator nach einem der Ansprüche 1 bis 6, **dadurch gekennzeichnet,**
- **dass** alle Linearbewegungsvorrichtungen (8) im Wesentlichen dieselben minimalen und maximalen Längen aufweisen und insbesondere baugleich ausgebildet sind, sodass insbesondere eine symmetrische Parallelkinematikanordnung (6) gebildet ist,
- oder dass eine entlang der Blickrichtung der Bedienperson (3) gesehen vordere Linearbewegungsvorrichtung (8) oder ein vorderes Linearbewegungsvorrichtungspaar eine größere maximale Länge aufweist, als eine hintere Linearbewegungsvorrichtung (8) oder ein hinteres Linearbewegungsvorrichtungspaar, sodass eine asymmetrische Parallelkinematikanordnung (6) gebildet ist,
- und/oder dass dass in der Parallelkinematikgrundstellung der Aufstellwinkel einer entlang der Blickrichtung der Bedienperson (3) gesehen vorderen Linearbewegungsvorrichtung (8, 17) oder eines vorderen Linearbewegungsvorrichtungspaars steiler ist, als der Aufstellwinkel einer hinteren Linearbewegungsvorrichtung (8, 18) oder eines hinteren Linearbewegungsvorrichtungspaars, sodass eine asymmetrische Parallelkinematikanordnung (6) gebildet ist.

8. Full Flight Flugsimulator nach einem der Ansprüche 1 bis 7, **dadurch gekennzeichnet,**
- **dass** der erste Nickwinkel (12) zwischen 25° und 35° beträgt,
- und/oder dass der erste Nickwinkel (12) zwischen 28° und 35° beträgt,
- und/oder dass der erste Nickwinkel (12) zwischen 29° und 35° beträgt,
- und/oder dass der erste Nickwinkel (12) zwischen 30° und 35° beträgt,
- und/oder dass der erste Nickwinkel (12) zwischen 32° und 35° beträgt,
- und/oder dass der erste (12) Nickwinkel zwischen 29° und 31° beträgt,
- und/oder dass der Differenzwinkel (14) zwischen etwa 2° und 20°, zwischen etwa 2° und 12°, zwischen etwa 3° und 10°, zwischen 4° und 8° oder etwa 5° beträgt.

9. Full Flight Flugsimulator nach einem der Ansprüche 1 bis 8, **dadurch gekennzeichnet,**
- **dass** zwischen dem Boden (10) und der Basis (7) oder zwischen dem Trägerelemenet (9) und der Simulatorkabine (1) ein Drehteller (19) oder ein Drehring (19) vorgesehen ist, sodass die Simulatorkabine (1) um eine Hochachse, insbesondere um die Gierachse (20) drehbar ist,
- und/oder dass zur Verarbeitung von Simulationssteuerdaten und zur Steuerung der Parallelkinematikanordnung eine Regelungseinrichtung vorgesehen ist, über die die Simulatorkabine (1) von der maximalen positiven Nickstellung in die maximale negative Nickstellung bringbar ist, wobei durch die maximale positive Nickstellung und die maximale negative Nickstellung die Nick-Bewegungsfreiheit der Simulatorkabine definiert ist.

10. **Verfahren** zur Flugsimulation auf einem Full Flight Flugsimulator nach einem der vorangegangenen Ansprüche umfassend folgende Schritte:
- Betätigen der Parallelkinematikanordnung, sodass sich die Simulatorkabine in ihrer Grundstellung befindet,
- anschließend Betätigen der Parallelkinematikanordnung, sodass die Simulatorkabine von ihrer Grundstellung um die Nickachse oder um eine zur Nickachse parallelen Achse um einen positven Nickwinkel von mehr als 25° nach hinten geneigt wird.

11. Verfahren nach Anspruch 10, **dadurch gekennzeichnet, dass** durch eine erste Betätigung der Parallelkinematikanordnung, durch welche sich die Simulatorkabine in ihrer Grundstellung befindet, ein stationärer Geradeausflug simuliert wird,
und dass durch eine zweite Betätigung der Parallelkinematikanordnung, durch welche die Simulatorkabine von ihrer Grundstellung um die Nickachse oder um eine zur Nickachse parallelen Achse um einen positiven Nickwinkel von mehr als 25° nach hinten geneigt wird, ein Full-Stall-Strömungsabriss simuliert wird.

12. Verfahren nach Anspruch 10 oder 11, **dadurch gekennzeichnet, dass** die Simulatorkabine ausschließlich durch Betätigung der Parallelkinematikanordnung von der Grundstellung um die Nickachse oder um eine zur Nickachse parallelen Achse um einen positiven Nickwinkel von mehr als 25° nach hinten geneigt wird.

13. Verfahren nach einem der Ansprüche 10 bis 12, **dadurch gekennzeichnet, dass** der positive Nickwinkel 26°, 27°, 28°, 29°, 30°, 31°, 32°, 33°, 34°, 35° oder mehr beträgt.

14. Verfahren nach einem der Ansprüche 10 bis 13, **dadurch gekennzeichnet, dass** durch eine erste Betätigung der Parallelkinematikanordnung, durch welche sich die Simulatorkabine in ihrer Grundstellung befindet, ein stationärer Geradeausflug simuliert wird,
und dass durch eine zweite Betätigung der Parallelkinematikanordnung, durch welche die Simulatorkabine von ihrer Grundstellung um die Nickachse oder um eine zur Nickachse parallelen Achse um einen positiven Nickwinkel von mehr als 25° nach hinten geneigt wird, ein Strömungsabriss oder ein Full-Stall-Strömungsabriss simuliert wird, und dass die simulierte Flugsituation dabei von einem zur Auslegung der Bewegungsfreiheit oder der Bewegungscharakteristik eines herkömmlichen Simulators herangezogenen worst-case-Szenario abweicht.

15. Verfahren nach einem der Ansprüche 10 bis 14, **dadurch gekennzeichnet, dass** durch eine erste Betätigung der Parallelkinematikanordnung, durch welche sich die Simulatorkabine in ihrer Grundstellung befindet, ein stationärer Geradeausflug simuliert wird, wobei die simulierte Geschwindigkeit geringer ist als die maximale Geschwindigkeit des simulierten Fluggeräts und insbesondere um mehr als 10% geringer ist als die maximale Geschwindigkeit des simulierten Fluggeräts,
und dass durch eine zweite Betätigung der Parallelkinematikanordnung, durch welche die Simulatorkabine von ihrer Grundstellung um die Nickachse oder um eine zur Nickachse parallelen Achse um einen positiven Nickwinkel von mehr als 25° nach hinten geneigt wird, ein Strömungsabriss oder ein Full-Stall-Strömungsabriss simuliert wird, wobei die simulierte Geschwindigkeit beim Strömungsabriss geringer ist als die maximale Geschwindigkeit des simulierten Fluggeräts und insbesondere um mehr als 10% geringer ist als die maximale Geschwindigkeit des simulierten Fluggeräts, und somit von einem zur Auslegung der Bewegungsfreiheit oder der Bewegungscharakteristik eines herkömmlichen Simulators herangezogenen worst-case-Szenario abweicht.

## Claims

1. A full flight simulator, comprising:
- a simulator cabin (1), wherein a seat (2) for an operator (3), an image display device (4) for displaying the simulated surroundings and at least one operating element (5) for generating simulation control data and in particular for controlling the simulated flight vehicle and for allowing the operator (3) to influence the simulation are provided in the simulator cabin (2),
- a parallel kinematic arrangement (6), comprising a basis (7), a support element (9) and multiple linear motion devices (8), wherein the support element (9) is connected to the basis (7) via at least three, preferably six, linear motion devices (8), and wherein the basis (7) is connected or coupled to the ground (10) and the support element (9) is connected or coupled to the simulator cabin (1) so that the simulator cabin (1) is arranged on the parallel kinematic arrangement (6),
wherein the simulator cabin (1) has an initial position, which substantially corresponds to a stationary straight flight of the simulated flight vehicle and in which the roll axis (11) of the simulated flight vehicle or of the operator (3) extends substantially horizontally, wherein the simulator cabin (1) has a maximum positive pitch position, in which the roll axis (11), based on the horizontal extension, is inclined upwards by a first pitch angle (12) as far a possible within the scope of the kinematic possibilities of the parallel kinematic arrangement (6) in compliance with potentially provided control reserves, whereby the operator (3) is inclined backwards,
wherein the simulator cabin (1) has a maximum negative pitch position, in which the roll axis (11), based on the horizontal extension, is inclined downwards by a second pitch angle (13) within the scope of the kinematic possibilities of the parallel kinematic arrangement (6) in compliance with potentially provided control reserves, whereby the operator (3) is inclined forwards, **characterized**
- **in that** the first pitch angle (12) is greater than 25°,
- **in that** the parallel kinematic arrangement (6) has a parallel kinematic initial position, in which the basis (7) and the support element (9) extend substantially parallel and in which the roll axis (11) is inclined upwards by a positive differential angle (14) and in which the simulator cabin (1) is arranged in a position deviating from its initial position,
- and **in that** the parallel kinematic arrangement (6) is arranged in a position deviating from the parallel kinematic initial position when the simulator cabin (1) is arranged in its initial position.

2. The full flight simulator according to Claim 1, **characterized**
- **in that** the amount of the first pitch angle (12) is greater than the amount of the second pitch angle (13),
or in that the amount of the first pitch angle (12) is greater than the amount of the second pitch angle (13) by a differential angle (14),
- and/or in that the inclination of the simulator cabin about the pitch axis (15) or about an axis parallel to the pitch axis (15) between the maximum negative pitch position and the maximum positive pitch position is achieved exclusively by actuating the parallel kinematic arrangement (6).

3. The full flight simulator according to Claim 1 or 2, **characterized**
- **in that** the linear motion devices (8) are designed as linear motion devices (8) with a controllably or adjustably variable length (16), wherein the length (16) of the linear motion devices (8) is between or in the range of a minimum length and a maximum length,
so that the support element (9) can be pivoted about at least two axes relative to the basis (7) by varying the length of the linear motion devices (8) and optionally has three degrees of pivotal freedom and three degrees of translational freedom,
- and/or in that the linear motion devices (8) are arranged in pairs, wherein two linear motion devices (8) forming a pair of linear motion devices are inclined relative to one another so that in particular a hexapod is formed.

4. The full flight simulator according to one of Claims 1 to 3, **characterized**
- **in that** the basis (7) is inclined relative to the support element (9) about the pitch axis (15) or an axis parallel to the pitch axis (15) when the simulator cabin (1) is arranged in its initial position.

5. The full flight simulator according to one of Claims 1 to 4, **characterized**
- **in that** the basis (7) is inclined upwards relative to a horizontal plane about a positive differential angle (14),
- or in that the roll axis (11) is inclined upwards relative to the extension of the support element (9) by a positive differential angle (14),
- or in that the basis (7), relative to a horizontal plane, and the roll axis (11), relative to the extension of the support element (9), are both inclined upwards by a positive differential angle (14),
wherein the differential angle (14) is specified in a normal plane of the pitch axis (15).

6. The full flight simulator according to one of Claims 1 to 5, **characterized**
- **in that** a wedge-shaped wedge arrangement (21) or a wedge arrangement acting in a wedge-shaped manner is provided between the basis (7) and the ground (10) for positioning the basis (7) relative to the horizontal plane in an inclined manner,
- and/or in that a wedge-shaped wedge arrangement (21) or a wedge arrangement acting in a wedge-shaped manner is provided between the simulator cabin (1) and the support element (9) for positioning the roll axis (11) relative to the extension of the support element (9) in an inclined manner,
- and/or in that the wedge arrangement (21) is a rigid wedge arrangement, the wedge angle of which remains constant during the simulation.

7. The full flight simulator according to one of Claims 1 to 6, **characterized**
- **in that** all linear motion devices (8) have substantially the same minimum and maximum lengths and are in particular identical in design so that in particular a symmetrical parallel kinematic arrangement (6) is formed,
- or in that a front linear motion device (8) or a front pair of linear motion devices as seen along the operator's (3) line of sight has a greater maximum length than a rear linear motion device (8) or a rear pair of linear motion devices so that an asymmetrical parallel kinematic arrangement (6) is formed,
- and/or in that in the parallel kinematic initial position the tilt angle of the front linear motion device (8, 17) or a front pair of linear motion devices as seen along the operator's (3) line of sight is steeper than the tilt angle of a rear linear motion device (8, 18) or a rear pair of linear motion devices so that an asymmetrical parallel kinematic arrangement (6) is formed.

8. The full flight simulator according to one of Claims 1 to 7, **characterized**
- **in that** the first pitch angle (12) is between 25° and 35°,
- and/or in that the first pitch angle (12) is between 28° and 35°,
- and/or in that the first pitch angle (12) is between 29° and 35°,
- and/or in that the first pitch angle (12) is between 30° and 35°,
- and/or in that the first pitch angle (12) is between 32° and 35°,
- and/or in that the first pitch angle (12) is between 29° and 31 °,
- and/or in that the differential angle (14) is between about 2° and 20°, between about 2° and 12°, between about 3° and 10°, between 4° and 8° or is about 5°.

9. The full flight simulator according to one of Claims 1 to 8, **characterized**
- **in that** a rotating plate (19) or a rotating ring (19) is provided between the ground (10) and the basis (7) or between the support element (9) and the simulator cabin (1) so that the simulator cabin (1) can be rotated about a vertical axis, in particular about the yaw axis (20),
- and/or in that a control means is provided for processing simulation control data and for controlling the parallel kinematic arrangement, via which the simulator cabin (1) can be brought from the maximum positive pitch position to the maximum negative pitch position, wherein the maximum positive pitch position and the maximum negative pitch position define the freedom of pitching movement of the simulator cabin.

10. A method for flight simulation on a full flight simulator according to one of the preceding claims, comprising the following steps:
- actuating the parallel kinematic arrangement so that the simulator cabin is in its initial position,
- and then actuating the parallel kinematic arrangement so that the simulator cabin is inclined backwards from its initial position about the pitch axis or about an axis parallel to the pitch axis by a positive pitch angle of more than 25°.

11. The method according to Claim 10, **characterized in that** a stationary straight flight is simulated by a first actuation of the parallel kinematic arrangement, through which the simulator cabin is in its initial position,
and **in that** a full stall is simulated by a second actuation of the parallel kinematic arrangement, through which the simulator cabin is inclined backwards from its initial position about the pitch axis or about an axis parallel to the pitch axis by a positive pitch angle of more than 25°.

12. The method according to Claim 10 or 11, **characterized in that** the simulator cabin is inclined backwards from the initial position about the pitch axis or about an axis parallel to the pitch axis by a positive pitch angle of more than 25° exclusively by actuating the parallel kinematic arrangement.

13. The method according to one of Claims 10 to 12, **characterized in that** the positive pitch angle is 26°, 27°, 28°, 29°, 30°, 31 °, 32°, 33°, 34°, 35° or more.

14. The method according to one of Claims 10 to 13, **characterized in that** a stationary straight flight is simulated by a first actuation of the parallel kinematic arrangement, through which the simulator cabin is in its initial position,
and **in that** a stall or a full stall is simulated by a second actuation of the parallel kinematic arrangement, by which the simulator cabin is inclined backwards from its initial position about the pitch axis or about an axis parallel to the pitch axis by a positive pitch angle of more than 25°, and **in that** the simulated flight situation thereby deviates from a worst-case scenario used for conceiving the freedom of movement or the characteristics of movement of a conventional simulator.

15. The method according to one of Claims 10 to 14, **characterized in that** a stationary straight flight is simulated by a first actuation of the parallel kinematic arrangement, through which the simulator cabin is in its initial position, wherein the simulated speed is lower than the maximum speed of the simulated flight vehicle and is in particular lower by more than 10 % compared to the maximum speed of the simulated flight vehicle,
and **in that** a stall or a full stall is simulated by a second actuation of the parallel kinematic arrangement, by which the simulator cabin is inclined backwards from its initial position about the pitch axis or about an axis parallel to the pitch axis by a positive pitch angle of more than 25°, wherein the simulated speed during stalling is lower than the maximum speed of the simulated flight vehicle and is in particular lower by more than 10 % compared to the maximum speed of the simulated flight vehicle so that it deviates from a worst-case scenario used for conceiving the freedom of movement or the characteristics of movement of a conventional simulator.

## Revendications

1. Un simulateur de vol full flight, comprenant :
- une cabine de simulateur (1) dans laquelle sont prévus un siège (2) pour un opérateur (3), un dispositif d'affichage d'images (4) pour afficher l'environnement simulé, et au moins un élément de commande (5) pour générer des données de commande de simulation et notamment pour commander l'engin volant simulé et pour influencer la simulation par l'opérateur (3),
- un agencement cinématique parallèle (6) comprenant une base (7), un élément porteur (9) et une pluralité de dispositifs de mouvement linéaire (8), dans lequel l'élément porteur (9) est relié à la base (7) par l'intermédiaire d'au moins trois, de préférence six dispositifs de mouvement linéaire (8), et dans lequel la base (7) est reliée ou couplée au sol (10) et l'élément porteur (9) est relié ou couplé à la cabine de simulateur (1) de sorte que la cabine de simulateur (1) est disposée sur l'agencement cinématique parallèle (6),
dans lequel la cabine de simulateur (1) présente une position initiale qui correspond sensiblement à un vol rectiligne stationnaire de l'engin volant simulé et dans laquelle l'axe de roulis (11) de l'engin volant simulé ou de l'opérateur (3) est sensiblement horizontal,
dans lequel la cabine de simulateur (1) présente une position de tangage positive maximale dans laquelle l'axe de roulis (11), partant de l'horizontal, est incliné vers le haut d'un premier angle de tangage (12), autant que possible dans le cadre des possibilités cinématiques de l'agencement cinématique parallèle (6), en respectant des réserves de commande éventuellement prévues, et l'opérateur (3) est ainsi incliné vers l'arrière,
dans lequel la cabine de simulateur (1) présente une position de tangage négative maximale dans laquelle l'axe de roulis (11), partant de l'horizontal, est incliné vers le bas d'un deuxième angle de tangage (13), dans le cadre des possibilités cinématiques de l'agencement cinématique parallèle (6), en respectant des réserves de commande éventuellement prévues, et l'opérateur (3) est ainsi incliné vers l'avant, **caractérisé**
- **en ce que** le premier angle de tangage (12) est supérieur à 25°,
- **en ce que** l'agencement cinématique parallèle (6) présente une position initiale de cinématique parallèle dans laquelle la base (7) et l'élément porteur (9) sont sensiblement parallèles, dans laquelle l'axe de roulis (11) est incliné vers le haut d'un angle de différence (14) positif et dans laquelle la cabine de simulateur (1) est disposée dans une position différente de sa position initiale,
- et **en ce que** l'agencement cinématique parallèle (6) est disposé dans une position différente de la position initiale de cinématique parallèle lorsque la cabine de simulateur (1) est disposée dans sa position initiale.

2. Le simulateur de vol full flight selon la revendication 1, **caractérisé**
- **en ce que** la valeur du premier angle de tangage (12) est supérieure à la valeur du deuxième angle de tangage (13),
ou en ce que la valeur du premier angle de tangage (12) est supérieure à la valeur du deuxième angle de tangage (13) d'un angle de différence (14),
- et/ou en ce que l'inclinaison de la cabine de simulateur autour de l'axe de tangage (15) ou autour d'un axe parallèle à l'axe de tangage (15) entre la position de tangage négative maximale et la position de tangage positive maximale s'effectue exclusivement par l'actionnement de l'agencement cinématique parallèle (6).

3. Le simulateur de vol full flight selon la revendication 1 ou 2, **caractérisé**
- **en ce que** les dispositifs de mouvement linéaire (8) sont réalisés comme des dispositifs de mouvement linéaire (8) avec une longueur (16) variable de manière contrôlable ou réglable, la longueur (16) des dispositifs de mouvement linéaire (8) se situant entre ou dans la région d'une longueur minimale et d'une longueur maximale,
de sorte que l'élément porteur (9) peut pivoter autour d'au moins deux axes par rapport à la base (7) par des modifications de la longueur des dispositifs de mouvement linéaire (8) et présente, le cas échéant, trois degrés de liberté de pivotement et trois degrés de liberté de translation,
- et/ou en ce que les dispositifs de mouvement linéaire (8) sont disposés par paires, dans lequel deux dispositifs de mouvement linéaire (8) formant une paire de dispositifs de mouvement linéaire sont inclinés l'un vers l'autre de sorte qu'un hexapode soit formé.

4. Le simulateur de vol full flight selon l'une des revendications 1 à 3, **caractérisé**
- **en ce que** la base (7) est inclinée par rapport à l'élément porteur (9) autour d'un axe de tangage (15) ou autour d'un axe parallèle à l'axe de tangage (15) lorsque la cabine de simulateur (1) est disposée dans sa position initiale.

5. Le simulateur de vol full flight selon l'une des revendications 1 à 4, **caractérisé**
- **en ce que** la base (7) est inclinée vers le haut par rapport à un plan horizontal d'un angle de différence (14) positif,
- ou en ce que l'axe de roulis (11) est inclinée vers le haut par rapport à l'extension de l'élément porteur (9) d'un angle de différence (14) positif,
- ou en ce que la base (7) est inclinée vers le haut par rapport à un plan horizontal et l'axe de roulis (11) est incliné vers le haut par rapport à l'extension de l'élément porteur (9) conjointement d'un angle de différence (14) positif,
dans lequel l'angle de différence (14) est indiqué dans un plan normal de l'axe de tangage (15).

6. Le simulateur de vol full flight selon l'une des revendications 1 à 5, **caractérisé**
- **en ce que** pour le positionnement incliné de la base (7) par rapport au plan horizontal, il est prévu un agencement de coin (21) en forme de coin ou agissant comme coin, qui est prévu entre la base (7) et le sol (10),
- et/ou en ce que pour le positionnement incliné de l'axe de roulis (11) par rapport à l'extension de l'élément porteur (9), il est prévu un agencement de coin (21) en forme de coin ou agissant comme coin, qui est prévu entre la cabine de simulateur (1) et l'élément porteur (9),
- et/ou en ce que l'agencement de coin (21) est un agencement de coin rigide dont l'angle de coin est inchangé pendant la simulation.

7. Le simulateur de vol full flight selon l'une des revendications 1 à 6, **caractérisé**
- **en ce que** tous les dispositifs de mouvement linéaire (8) ont sensiblement les mêmes longueurs minimales et maximales et, en particulier, sont de conception identique, de sorte que, en particulier, un agencement cinématique parallèle (6) symétrique soit formé,
- ou en ce qu'un dispositif de mouvement linéaire (8) avant ou une paire de dispositifs de mouvement linéaire avant, tel que vu dans la direction d'observation de l'opérateur (3), a une longueur maximale plus grande qu'un dispositif de mouvement linéaire (8) arrière ou une paire de dispositifs de mouvement linéaire arrière de sorte qu'un agencement cinématique parallèle (6) asymétrique soit formé,
- et/ou en ce que, dans la position initiale de cinématique parallèle, l'angle d'inclinaison d'un dispositif de mouvement linéaire (8, 17) avant ou d'une paire de dispositifs de mouvement linéaire avant, tel que vu dans la direction d'observation de l'opérateur (3), est plus raide que l'angle d'inclinaison d'un dispositif de mouvement linéaire (8, 18) arrière ou d'une paire de dispositifs de mouvement linéaire arrière de sorte qu'un agencement cinématique parallèle (6) asymétrique soit formé.

8. Le simulateur de vol full flight selon l'une des revendications 1 à 7, **caractérisé**
- **en ce que** le premier angle de tangage (12) est compris entre 25° et 35°,
- et/ou en ce que le premier angle de tangage (12) est compris entre 28° et 35°,
- et/ou en ce que le premier angle de tangage (12) est compris entre 29° et 35°,
- et/ou en ce que le premier angle de tangage (12) est compris entre 30° et 35°,
- et/ou en ce que le premier angle de tangage (12) est compris entre 32° et 35°,
- et/ou en ce que le premier angle de tangage (12) est compris entre 29° et 31°,
- et/ou en ce que l'angle de différence (14) est compris entre environ 2° et 20°, entre environ 2° et 12°, entre environ 3° et 10°, entre 4° et 8° ou est d'environ 5°.

9. Le simulateur de vol full flight selon l'une des revendications 1 à 8, **caractérisé**
- **en ce qu'**un plateau tournant (19) ou un anneau rotatif (19) est prévu entre le sol (10) et la base (7) ou entre l'élément porteur (9) et la cabine de simulateur (1) de sorte que la cabine de simulateur (1) puisse tourner autour d'un axe vertical, en particulier autour de l'axe de lacet (20),
- et/ou en ce que, pour le traitement des données de commande de simulation et pour la commande de l'agencement cinématique parallèle, il est prévu un dispositif de réglage par lequel la cabine de simulateur (1) peut être amenée de la position de tangage positive maximale à la position de tangage négative maximale, la liberté de mouvement de tangage de la cabine de simulateur étant définie par la position de tangage positive maximale et la position de tangage négative maximale.

10. Une méthode pour la simulation de vol sur un simulateur de vol full flight selon l'une des revendications précédentes, comprenant les étapes suivantes :
- actionner l'agencement cinématique parallèle de sorte que la cabine de simulateur soit dans sa position initiale,
- ensuite, actionner l'agencement cinématique parallèle de sorte que la cabine de simulateur soit inclinée vers l'arrière de sa position initiale autour de l'axe de tangage ou autour d'un axe parallèle à l'axe de tangage d'un angle de tangage positif de plus de 25°.

11. La méthode selon la revendication 10, **caractérisée en ce qu'**un vol rectiligne stationnaire est simulé par un premier actionnement de l'agencement cinématique parallèle par lequel la cabine de simulateur est dans sa position initiale,
et **en ce qu'**un décrochage complet est simulé par un deuxième actionnement de l'agencement cinématique parallèle par lequel la cabine de simulateur est inclinée vers l'arrière de sa position initiale autour de l'axe de tangage ou autour d'un axe parallèle à l'axe de tangage d'un angle de tangage positif de plus de 25°.

12. La méthode selon la revendication 10 ou 11, **caractérisée en ce que** la cabine de simulateur est inclinée vers l'arrière de la position initiale autour de l'axe de tangage ou autour d'un axe parallèle à l'axe de tangage d'un angle de tangage positif de plus de 25° uniquement par l'actionnement de l'agencement cinématique parallèle.

13. La méthode selon l'une des revendications 10 à 12, caractérisée en que l'angle de tangage positif est de 26°, 27°, 28°, 29°, 30°, 31°, 32°, 33°, 34°, 35° ou plus.

14. La méthode selon l'une des revendications 10 à 13, caractérisée en qu'un vol rectiligne stationnaire est simulé par un premier actionnement de l'agencement cinématique parallèle par lequel la cabine de simulateur est dans sa position initiale,
et en ce qu'un décrochage ou un décrochage complet est simulé par un deuxième actionnement de l'agencement cinématique parallèle par lequel la cabine de simulateur est inclinée vers l'arrière de sa position initiale autour de l'axe de tangage ou autour d'un axe parallèle à l'axe de tangage d'un angle de tangage positif de plus de 25°, et en ce que la situation de vol simulée est ainsi différente d'un scénario de cas le plus défavorable utilisé pour concevoir la liberté de mouvement ou les caractéristiques de mouvement d'un simulateur conventionnel.

15. La méthode selon l'une des revendications 10 à 14, caractérisée en qu'un vol rectiligne stationnaire est simulé par un premier actionnement de l'agencement cinématique parallèle par lequel la cabine de simulateur est dans sa position initiale, dans laquelle la vitesse simulée est inférieure à la vitesse maximale de l'engin volant simulé et, en particulier, inférieure à la vitesse maximale de l'engin volant simulé de plus de 10 %,
et en ce qu'un décrochage ou un décrochage complet est simulé par un deuxième actionnement de l'agencement cinématique parallèle par lequel la cabine de simulateur est inclinée vers l'arrière de sa position initiale autour de l'axe de tangage ou autour d'un axe parallèle à l'axe de tangage d'un angle de tangage positif de plus de 25°, dans laquelle la vitesse simulée lors du décrochage est inférieure à la vitesse maximale de l'engin volant simulé et, en particulier, inférieure à la vitesse maximale de l'engin volant simulé de plus de 10 % et est ainsi différente d'un scénario de cas le plus défavorable utilisé pour concevoir la liberté de mouvement ou les caractéristiques de mouvement d'un simulateur conventionnel.
